Europäisches Patentamt

European Patent Office

Office européen des brevets

(19)

(11) Numéro de publication : **0 451 017 A1**

(12) # DEMANDE DE BREVET EUROPEEN

(21) Numéro de dépôt : **91400808.1**

(51) Int. Cl.⁵ : **H01S 3/06, H01S 3/108**

(22) Date de dépôt : **26.03.91**

(30) Priorité : **30.03.90 FR 9004081**

(43) Date de publication de la demande :
**09.10.91 Bulletin 91/41**

(84) Etats contractants désignés :
**DE FR GB**

(71) Demandeur : **THOMSON-CSF**
**51, Esplanade du Général de Gaulle**
**F-92800 Puteaux (FR)**

(72) Inventeur : **Papuchon, Michel**
**THOMSON-CSF, SCPI, CEDEX 67**
**F-92045 Paris la Defense (FR)**
Inventeur : **Pocholle, Jean-Paul**
**THOMSON-CSF, SCPI, CEDEX 67**
**F-92045 Paris la Defense (FR)**
Inventeur : **Lallier, Eric**
**THOMSON-CSF, SCPI, CEDEX 67**
**F-92045 Paris la Defense (FR)**

(74) Mandataire : **Guérin, Michel et al**
**THOMSON-CSF SCPI**
**F-92045 PARIS LA DEFENSE CEDEX 67 (FR)**

(54) **Dispositif laser à changeur de fréquence intégré de façon monolithique.**

(57)   L'invention concerne un dispositif laser à barreau solide,intégré de façon monolithique à un générateur de fréquences optiques différentes de la fréquence d'émission du laser.

   Selon l'invention, le dispositif laser solide à pompage par diode laser (43) comporte un barreau (41) siège de l'effet laser réalisé dans un matériau optique non-linéaire, par dopage avec une terre rare (42), et comprend un guide d'onde optique (44) réalisé dans la masse dudit barreau (41) en matériau optique non-linéaire dopé, parallèlement à l'axe du barreau (41), ledit guide d'onde optique (44) coopérant avec des moyens (45,46,47) de changement de la fréquence optique du faisceau laser.

   Une application préférentielle est l'obtention d'une fréquence laser double de la fréquence fondamentale, permettant, dans le cas d'un laser au néodyme, d'obtenir un rayonnement vert, utilisable par exemple dans les lecteurs de disques optiques numériques.

Fig. 4

EP 0 451 017 A1

Le domaine de l'invention est celui des lasers solides. Plus précisément l'invention concerne un dispositif laser intégré de façon monolithique à un générateur de fréquences optiques différentes de la fréquence d'émission du laser.

L'invention permet ainsi par exemple d'augmenter la fréquence optique du rayonne-ment laser, et donc de réduire la longueur d'onde correspondante. Elle s'applique donc en particulier dans les cas où le pouvoir de définition du système incluant le laser est fonction de la longueur d'onde, et par exemple dans les lecteurs de disques optiques numériques, dans lesquels la densité de stockage est inversement proportionnelle au carré de la longueur d'onde.

L'invention permet également de réaliser des dispositifs laser à fréquence accordable.

De très nombreuses autres applications s'ouvrent au principe de l'invention, comme il apparaîtra à l'homme du métier.

De façon connue, on sait réaliser des guides d'onde dans des matériaux optiques. Un tel guide d'onde peut être obtenu par exemple par diffusion de titane ou par échange protonique.

Le guide d'onde ainsi obtenu présente un indice de réfraction $n_1$ supérieur à l'indice $n_2$ du cristal. Sa section ayant une surface très faible, de l'ordre de quelques $\mu m^2$, un tel guide d'onde permet d'obtenir une grande densité de puissance, et donc un champ électrique important.

On connaît d'autre part plusieurs moyens de réaliser des guides d'onde permettant le doublage de la fréquence d'une onde optique, en utilisant des matériaux optiques non-linéaires, du type niobate de lithium $LiNbO_3$.

Pour obtenir un rayonnement laser à une fréquence différente de la fréquence d'émission, il est jusqu'à présent nécessaire de disposer d'une part d'un laser, et d'autre part d'un guide d'onde réalisé dans un matériau optique non-linéaire et préparé en vue du changement de fréquence. La connexion entre ces éléments entraîne d'une part des pertes optiques, et d'autre part un encombrement relativement important.

L'invention a pour objectif de pallier ces inconvénients.

Plus précisément, l'invention a pour objectif de fournir un dispositif laser de petite taille, et de faible coût de revient.

Un autre objectif de l'invention est de fournir un tel dispositif permettant la conversion de fréquence, et notamment le doublement de fréquence.

Un objectif complémentaire de l'invention est de fournir un tel dispositif, permettant de convertir dans le domaine du visible des rayonnements laser infrarouges.

Ces objectifs, ainsi que d'autres qui apparaîtront par la suite, sont atteints à l'aide d'un dispositif laser solide à pompage par diode laser, dont le barreau siège de l'effet laser est réalisé dans un matériau optique non-linéaire, par dopage avec une terre rare, comprenant un guide d'onde optique réalisé dans la masse dudit barreau, parallèlement à l'axe du barreau, ledit guide d'onde optique coopérant avec des moyens de changement de la fréquence optique du faisceau laser.

De façon avantageuse, ledit matériau optique non-linéaire est du niobate de lithium $LiNbO_3$.

Préférentiellement, ladite terre rare appartient au groupe comprenant : néodyme, erbium, holmium.

Ledit guide d'onde peut notamment être obtenu par diffusion de titane ou par échange protonique.

Dans un mode de réalisation particulier de l'invention, lesdits moyens de changement de la fréquence optique sont des moyens de doublement de ladite fréquence d'émission du laser, obtenus par la technique Cerenkov ou par la technique d'inversion périodique du signe du coefficient non linéaire.

Avantageusement, le dispositif de l'invention comprend des moyens de réflexion appartenant au groupe comprenant:
– miroirs sur les deux faces dudit guide d'onde ;
– résonateur distribué ;
– miroirs de Bragg.

Lesdits moyens de réflexion possèdent un coefficient de réflexion maximal pour la fréquence d'émission dudit laser, et, pour le miroir de sortie, un coefficient de réflexion minimal pour la fréquence de sortie du dispositif.

Dans d'autres modes de réalisation particuliers de l'invention, lesdits moyens de changement de la fréquence optique comprennent des moyens d'addition et/ou de soustraction des fréquences optiques présentes dans ledit guide d'onde et/ou des moyens d'oscillation paramétrique, permettant d'accorder ladite fréquence de sortie, par effet électrooptique.

D'autres caractéristiques et avantages de l'invention apparaîtront à la lecture suivante de modes de réalisation préférentiels de l'invention, donné à titre illustratif et non limitatif et des dessins annexés dans lesquels :
– la figure 1 présente des courbes d'intensité de la fréquence double de la fréquence fondamentale du laser, en fonction dela longueur parcourue ;
– la figure 2 illustre le doublage de fréquence dans le cas de la technique de Cerenkov ;
– la figure 3 représente les niveaux d'énergie d'une terre rare, et le principe de l'émission laser ;
– la figure 4 est un schéma d'un mode de réalisation particulier du dispositif laser de l'invention.

Le mode de réalisation de l'invention présenté ci-après est un laser solide intégré de façon monolithique à un doubleur de fréquence optique non-linéaire.

Les différentes variantes décrites utilisent comme matériau de substrat un cristal optiquement non-linéaire, permettant le changement de fréquence, du type niobate de lithium LiNbO₃.

Ce cristal est dopé à l'aide d'une terre rare, par exemple du néodyme Nd⁺⁺⁺, actuellement disponible dans le commerce.

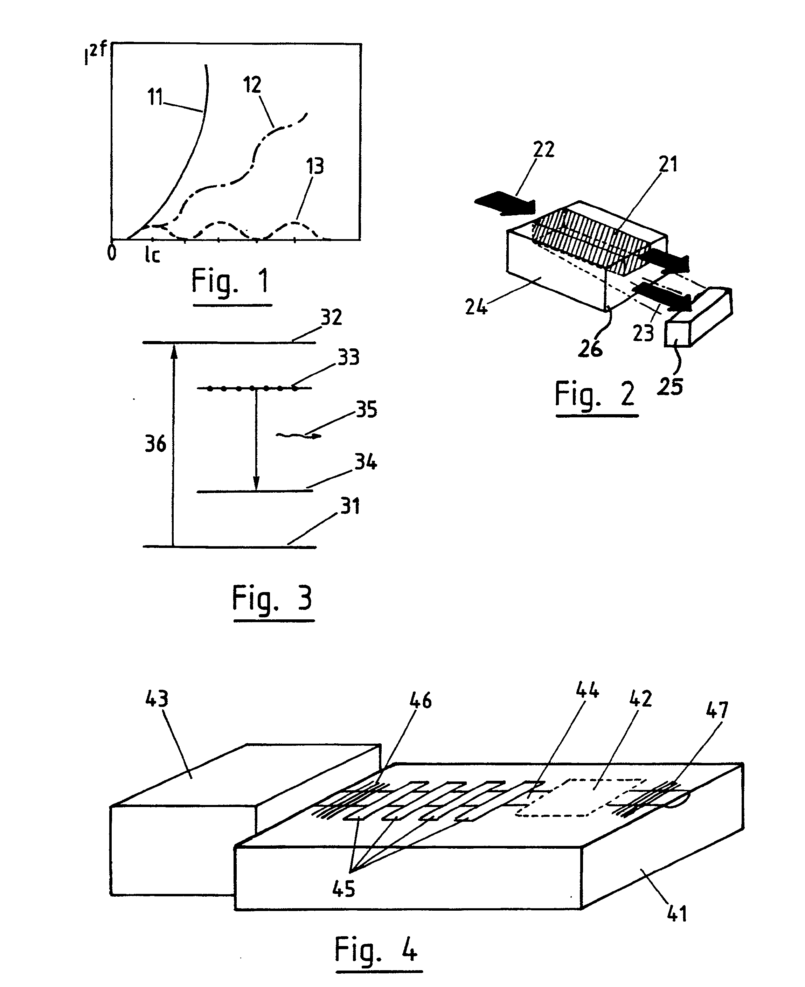

On connaît déjà l'utilisation de terres rares pour la réalisation de lasers solides. Ces terres rares présentent la caractéristique de posséder quatre niveaux d'énergie tels que représentés en figure 3.

Les électrons passent de l'état non excité 31 à l'état excité 32, par pompage laser 36, par exemple sous l'action d'une diode laser. Ce pompage 36 se fait par résonance.

Il passe ensuite à un niveau inter-médiaire métastable 33, c'est-à-dire à longue durée de vie. Il s'agit d'une relaxation non radiative, n'émettant pas de photon. Ce niveau 33 permet de réaliser une forte inversion de population. Lorsque la population du niveau 34 est inférieure à celle du niveau 33, il peut y avoir effet laser, par le passage commandé des électrons du niveau 33 au niveau 34 entraînant la production 35 de photons.

Le dopage du cristal peut être réalisé localement, sur une partie du guide d'onde, par exemple par les techniques de diffusion ou d'implantation d'ions. Dans ce cas, les ions terres rares sont incorporés localement dans le cristal LiNbO₃, en laissant les autres zones vierges.

Le dopage peut également être fait dans la masse du substrat.

Un guide d'onde est ensuite réalisé dans le cristal, par exemple par diffusion de titane ou par échange protonique. L'utilisation de l'échange protonique conduit à un très fort confinement optique et à un guide d'onde optique pour un champ électrique lumineux parallèle à l'axe optique du cristal.

L'utilisation d'un substrat optique non-linéaire permet de réaliser le changement de la fréquence du rayonnement laser.

On sait en effet que toute onde électromagnétique induit dans le milieu qu'elle traverse une polarisation. Les dipoles ainsi induits rayonnent à leur tour une onde, à la même fréquence que l'onde incidente. Cependant, certains matériaux, et notamment environ 20 % des cristaux, tel que le niobate de lithium LiNbO₃, présente la propriété de non-centrosymétrie. Dans ce cas, la polarisation P est proportion-nelle à $\chi \xi^{(1)} + \chi^{(2)} \xi\xi$, où :

$\xi$ est l'onde électromagnétique,

$\chi^{(1)}$ est la susceptibilité linéaire,

$\chi^{(2)}$ est la susceptibilité non linéaire du second ordre.

Ainsi, l'onde réémise possède deux fréquences, l'une identique à celle de l'onde incidente, correspondant au terme linéaire, et l'autre à la fréquence double, correspondant au terme non linéaire du second ordre.

Dans le guide d'onde, la puissance peut être très grande, et donc le champ très important. Le terme $\chi^{(2)} \xi \xi$ devient alors non négligeable. On obtient donc deux longueurs d'onde, correspondant à la fréquence de base et à la fréquence double. Dans le cas d'un rayonnement laser obtenu à l'aide de néodyme, on obtient les longueurs d'onde $\lambda_1 = 1{,}083$ μm, dans l'infrarouge, et $\lambda_2 = 0{,}5415$ μm, dans le vert.

Ainsi, pour obtenir le doublage de la fréquence d'émission du laser, on réalise une conversion progressive de la polarisation $p^f$ en polarisation $p^{2f}$, en conservant dans le guide d'onde les ondes à la fréquence d'émission et en permettant la sortie des ondes à la fréquence double, à l'aide de miroirs particuliers.

On sait que le rendement de conversion maximal est obtenu lorsqu'il y a accord de phase entre les ondes.

Cela nécessite que les indices de réfraction du cristal en fonction de la fréquence $n^f$ et $n^{2f}$ soient égaux, et donc que le milieu soit non dispersif. Cependant, il n'existe pas de cristal présentant la propriété de non dispersion.

Pour pallier cet inconvénient, on peut utiliser soit la méthode dite Cerenkov, soit la technique dite de quasi accord de phase par inversion périodique du signe du coefficient non linéaire du guide d'onde, par exemple par diffusion localisée et périodique du titane.

La figure 1 montre l'intensité de l'onde à la fréquence double de la fréquence fondamentale, dans différents cas, en fonction de la longueur d'interaction. La courbe 11 correspond au cas idéal, où il y a accord de phase. Il s'agit alors d'une progression quadratique. La courbe 12 correspond à un quasi accord de phase.

La courbe 13 représente les interférences qui apparaissent lorsqu'il n'y a pas d'accord de phase. Il est alors impossible d'obtenir un doublage efficace de la fréquence.

La figure 2 présente la structure d'un guide d'onde 21 permettant la génération d'une fréquence double de la fréquence d'émission du laser, selon l'effet Cerenkov. L'onde fondamentale 22 traverse le guide d'onde 21. L'onde à la fréquence double 23 est émise dans le substrat 24 avec un certain angle (16,2° dans le cas du niobate de lithium), dit angle de Cerenkov. Cette méthode présente l'inconvénient de générer un faisceau non circulaire. De plus, le rendement en puissance est faible, de l'ordre de 1 à 2 %.

Le principe du doublage de fréquence par la méthode Cerenkov est plus précisément décrit notamment dans le document de Taniuchi et Yamamoto " Second harmonic generation in proton exchanged guides" ("Génération de la seconde harmonique dans les guides obtenus par échange protonique") (SPIE Vol. 864 Advanced Optoelectronic Technology (1987)).

Selon l'invention, on prévoit en application de ce principe, des moyens de couplage 25 (figure 2) placés sur le trajet du faisceau dévié 23 et donc situés en dehors de l'axe du guide 21. Ces moyens de couplage 25 sont de préférence plaqués à la face 26 et servent d'interface avec d'autres circuits non représentés.

Une autre méthode est celle du quasi accord de phase. Celle-ci peut par exemple être réalisée en traçant des domaines perpendiculairement à l'axe du guide d'onde, présentant des polarisations inversées. Le renversement périodique des domaines ferroélectriques est par exemple présenté dans le document "Current induced periodic ferroelectric domain structures in LiNbO₃ applied for efficient nonlinear optical frequency mixing" ("Structures à domaines ferroélectriques périodiques induits par courant dans LiNbO₃, appliquées à un mixage de fréquences optiques non-linéaire efficace") de Feisst et Loidl (Appl. Phys. Lett. 47 (11), December 1985).

Pour obtenir en sortie du guide d'onde un rayonnement important à la fréquence double de la fréquence d'émission, le guide d'onde doit être équipé, à ses deux extrémités, de miroirs ayant un coefficient de réflexion maximal à la longueur d'onde d'émission. Le miroir de sortie doit, d'autre part, présenter un coefficient de réflexion minimal pour la longueur d'onde moitié.

De façon connue, les miroirs du guide d'onde peuvent être réalisés soit sur les faces d'entrée et de sortie du dispositif, soit sous la forme d'un résonateur distribué gravé dans le substrat ou de deux miroirs de Bragg gravés.

L'utilisation de réflecteurs distribués ou de Bragg permet de synthétiser un miroir, en réalisant des ondulations réfléchissant en phase chacune une partie de l'onde. L'avantage de cette technique est que l'ensemble du traitement du guide d'onde est réalisé sur une seule face, le dessus, aussi bien pour la réalisation proprement dite du guide d'onde que pour les réflecteurs de Bragg. Il n'est donc pas nécessaire de traiter les bords pour y déposer des miroirs.

Les miroirs du guide d'onde doivent avoir un coefficient de réflexion maximal à la longueur d'onde d'émission du néodyme dans LiNbO₃, soit environ 1,08μm, de façon à conserver dans le guide d'onde les ondes à la fréquence fondamentale. De plus, le miroir de sortie doit avoir un coefficient de réflexion minimal à la longueur d'onde moitié, soit environ 0,54μm.

Dans le cas où ces miroirs sont des multicouches diélectriques sur les faces d'entrée et de sortie du dispositif, le processus de fabrication peut comprendre les étapes suivantes :

- renversement des domaines ferroélectriques, si cette technique est utilisée pour l'accord de phase,
- réalisation du guide d'onde par échange protonique,
- polissage des tranches,
- réalisation des multicouches diélectriques.

La réalisation de tels miroirs nécessite le traitement des tranches du guide d'onde, et s'avère relativement complexe. Il est plus facile de synthétiser un effet miroir sur la longueur du dispositif. Il s'agit alors de réseaux gravés ou diffusés, soit pour réaliser un résonateur distribué, soit pour fabriquer deux réflecteurs intégrés du type miroirs de Bragg.

Ces réseaux permettent d'assurer une réflexion maximale à la longueur d'onde fondamentale, soit 1,08 μm dans le cas du néodyme. Les pas de ces réseaux sont donnés par la formule :

$$\lambda / p = q. / 2.n$$

avec :

    p est le pas du réseau,

    q est un nombre entier,

    $\lambda$ est la longueur d'onde du laser utilisé dans le vide,

    n est l'indice du matériau substrat à la longueur d'onde $\lambda$.

Dans le cas où de tels réseaux sont fabriqués par usinage, le processus de fabrication du laser de l'invention peur comprendre les étapes suivantes :

- fabrication des réseaux de diffraction,
- inversion périodique des domaines dans la cavité laser, si cette technique est utilisée pour l'accord de phase,
- polissage des faces d'entrée et de sortie pour permettre le couplage et le découplage.

La figure 4 présente un mode de réalisation particulier de l'invention, dans lequel le substrat 41 est du niobate de lithium LiNbO₃ et le dopant 42 du néodyme Nd⁺⁺⁺. le dopage a été réalisé de façon sélective, par exemple par diffusion ou implantation d'ions, dans une portion du cristal.

Une diode laser 43 permet le pompage laser.

Le guide d'onde 44 est réalisé par échange protonique, de façon que le confinement optique soit fort.

L'accord de phase est obtenu par renversement périodique 45 des domaines ferroélectriques. La largeur de chacun de ces domaines est par exemple de 8μm. Cette largeur est déterminée selon la formule :

$$d = (2m + 1).l_c,$$

où :

    d est la largeur du domaine,

    m est un nombre entier,

    $l_c$ est la longueur de cohérence caractérisant le processus non linéaire du deuxième ordre c'est-à-dire la distance sur laquelle l'onde à la fréquence fondamentale et l'onde à la fréquence double sont en phase. Plus précisément, la longueur de cohérence est définie par :

$$lc = \pi/(2 \beta_F - \beta_H)$$

où $_F$ et $_H$ sont respectivement les constantes de propagation des modes des ondes fondamentales et harmoniques en interaction dans le guide d'ondes.

Les miroirs sont des réflecteurs de Bragg 46,47. Ils sont réalisés par exposition d'une couche de résine photosensible à des franges d'interférences.

La résine est ensuite développée par des techniques classiques. On obtient alors une surface sinusoïdale, permettant la réflexion des ondes à la longueur d'onde choisie.

Pour une puissance de pompe 43 de 25 mW, un tel dispositif permet d'obtenir des effets lasers avec des puissances de sortie de l'ordre de 3 mW. Des puissances de l'ordre de 30 à 40 mW sont alors présentes dans la cavité. En couplant ces puissances à la technique d'accord de phase avec coefficient non-linéaire périodique, il est possible d'atteindre des puissances dans le vert de l'ordre de plusieurs mW.

L'intégration du laser et du guide d'onde non-linéaire permet d'obtenir un composant miniature pompé par une diode laser 43, dont la taille peut être de quelques millimètres, à faible puissance de seuil et à rendement élevé.

Cela permet de réaliser un dispositif laser relativement bon marché, susceptible de nombreuses applications, notamment grand-public, telles que les lecteurs de disques optiques numériques.

Les effets non-linéaires utilisés ne limitent pas l'invention au doublement de fréquence. Ils permettent également l'addition ou la soustraction de fréquence, ainsi que l'oscillation paramétrique. Dans ce dernier cas, on obtient un dispositif complètement monolithique de source accordable, en utilisant éventuellement l'effet électrooptique dans le cristal, pompé par diode laser.

Dans le cas où l'interaction visée est l'addition ou la soustraction de fréquences, celle-ci peut être réalisée en utilisant les ondes de pompe et laser.

Dans ce cas, le mélange non linéaire de ces deux ondes donne lieu à la génération de nouvelles longueurs d'onde.

Par exemple : si $\lambda_{pompe} = 0,814$ μm et $\lambda_{laser}$ 1,083 μm :

a) Addition

$1/\lambda_{générée} = 1/\lambda_{laser} + 1/\lambda_{pompe} = 1/0,814 + 1/1,083$
soit
$\lambda_{générée} = 0,464$ μm

b) Soustraction

$1/\lambda_{générée} = 1/\lambda_{pompe} - 1/\lambda_{laser} = 1/0,814 - 1/1,083$
soit
$\lambda_{générée} = 3,27$ μm

Si l'accord de phase est obtenu grâce à la méthode du quasi accord de phase avec un réseau périodique de polarisation ferroélectrique, le pas de ce réseau doit vérifier :

a) Addition de fréquence :

pour la longueur de cohérence :
$[(\beta_L + \beta_P) - \beta_G]$ lc $= \pi$
$(\beta_L, \beta_P, \beta_G$ étant les constantes de propagation des ondes respectivement laser, pompe et générée)
pas du réseau = 2 (2m+1)Lc

b) Soustraction de fréquence :

pour la longueur de cohérence :
$[(\beta_L - \beta_P) - \beta_G]$ lc $= \pi$
pas du réseau = 2 (2m+1) Lc

Dans le cas où la réalisation d'un oscillateur paramétrique est envisagée on peut procéder comme suit :

La configuration du laser guide d'onde (Terre rare : LiNbO$_3$) pompé par diode laser est celle déjà décrite précédemment. L'onde laser à 1, 08 μm environ va dans ce cas être utilisée comme onde de pompe pour un oscillateur paramétrique utilisant le même guide d'onde. Dans ce cas, par interaction non linéaire dans le guide d'ondes, un photon pompe à $\lambda_L = 1,08$ μm donne naissance à deux photons "idler" ($\lambda_i$) et signal ($\lambda_s$) dont les longueurs d'ondes vérifient la relation :
$1/\lambda_L = 1/\lambda_s + 1/\lambda_i$

Lors de cette interaction, une deuxième relation doit être vérifiée ( conservation des "quantités de mouvements").
$$\beta_L = \beta_S + \beta_I$$
Cette dernière condition correspond à la condition d'accord de phase et celle-ci va donc déterminer les longueurs d'ondes générées. Si on place le milieu dans un deuxième résonateur (qui peut être confondu physiquement avec celui du laser), on peut ainsi obtenir un oscillateur qui à partir de la longueur d'onde laser va générer deux nouvelles ondes aux longueurs d'ondes $\lambda_s$ et $\lambda_i$. Comme le LiNbO$_3$ est aussi électrooptique, l'application d'un champ électrique par l'intermédiaire de deux électrodes disposées par exemple de part et d'autre du guide d'onde, va modifier les indices de réfraction des ondes en interaction et donc leurs constantes de propagation permettant ainsi de modifier les longueurs d'ondes auxquelles la relation $\beta_L = \beta_S + \beta_I$ est vérifiée. On a ainsi la possibilité d'obtenir des émissions accordables par un champ électrique.

Dans le cas de cet oscillateur paramétrique, l'accord de phase peut par exemple être réalisé à l'aide de l'inversion périodique de la polarisation ferroélectrique et le pas du réseau doit alors vérifier la relation :
Longueur de cohérence lc :
$[\beta_L - (\beta_S + \beta_I)]$ lc $= \pi$
Pas du réseau = 2 (2m+1) lc.

Les miroirs du laser et de l'oscillateur paramétrique peuvent être constitués par des traitements réflecteurs adaptés sur les deux faces du guide d'onde ($R_{MAX}$ à $\lambda_L$ et à $\lambda_S$ et/ou $\lambda_I$). Ils peuvent être aussi séparés physiquement : miroirs de Bragg à la surface du guide d'onde pour le laser ($\lambda_L$) et miroirs multidiélectriques sur les entrées/sorties pour l'oscillateur paramétrique.

## Revendications

1. Dispositif laser solide à pompage par diode laser (43), caractérisé en ce que le barreau (41) siège de l'effet laser est réalisé dans un matériau optique non-linéaire, par dopage avec une terre rare (42), et en ce qu'il comprend un guide d'onde optique (44) réalisé dans la masse dudit barreau (41), ainsi que des moyens (45,46,47) de changement de la fréquence optique du faisceau laser.

2. Dispositif selon la revendication 1, caractérisé en ce que ledit matériau optique non-linéaire est du niobate de lithium LiNbO$_3$.

3. Dispositif selon la revendication 1, caractérisé en ce que ladite terre rare (42) appartient au groupe comprenant : néodyme, erbium, homium.

4. Dispositif selon la revendication 1, caractérisé en ce que :
   – ledit guide d'onde (44) est réalisé par diffusion de titane et/ou par échange protonique selon un axe déterminé
   – que le doublage de fréquence étant obtenu par effet cerenkov selon une direction faisant un angle avec l'axe du guide d'onde, il comporte des moyens de couplage optique situés sur ladite direction

5. Dispositif selon la revendication 1, caractérisé en ce que lesdits moyens (45,46,47) de changement de la fréquence optique sont des moyens de doublement de ladite fréquence d'émission du laser, obtenus par inversion périodique du signe du coefficient non linéaire dudit guide d'onde.

6. Dispositif selon la revendication 5, caractérisé en ce que le guide d'onde est réalisé par échange protonique et que l'inversion périodique du signe du coefficient non linéaire est obtenue par diffusion de titane au moins dans le guide dans des zones régulièrement réparties.

7. Dispositif selon la revendication 6, caractérisé en ce que la longueur desdites zones et la distance qui les sépare ont pour valeurs d = (2m + 1)lc, lc étant la longueur de cohérence.

8. Dispositif selon l'une quelconque des revendications 1 à 5, caractérisé en ce qu'il comprend des moyens (46,47) de réflexion appartenant au groupe comprenant:
   – miroirs sur les deux faces dudit guide d'onde ;
   – résonateur distribué ;
   – miroirs de Bragg.

9. Dispositif selon la revendication 8, caractérisé en ce que lesdits moyens de réflexion (46,47) possèdent un coefficient de réflexion maximal pour la fréquence d'émission dudit laser, et, pour le miroir de sortie (47), un coefficient de réflexion minimal pour la fréquence de sortie du dispositif.

10. Dispositif selon la revendication 1, caractérisé en ce que lesdits moyens (45,46,47) de changement de la fréquence optique comprennent des moyens d'addition et/ou de soustraction des fréquences optiques présentes dans ledit guide d'onde.

11. Dispositif selon la revendication 1, caractérisé en ce que lesdits moyens (45,46,47) de changement de la fréquence optique comprennent des moyens d'oscillation paramétrique, permettant d'accorder ladite fréquence de sortie, par effet électrooptique.

Fig. 1

Fig. 2

Fig. 3

Fig. 4

Office européen
des brevets

# RAPPORT DE RECHERCHE EUROPEENNE

Numero de la demande

EP    91 40 0808
Page 1

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | PROCEEDINGS OF THE CONFERENCE ON OPTICAL SPACE COMMUNICATION, ECO2, PARIS, 24-26 AVRIL 1989 vol. 1131, pages 247 - 251; E. LALLIER ET AL.: 'Towards a laser diode pumped Nd:LiNbO3 waveguide laser ' * page 247, ligne 1 - ligne 19 * * page 249, ligne 11 - ligne 21 * | 1-11 | H01S3/06 H01S3/108 |
| A | J. OPT. SOC. AM. B vol. 3, no. 1, Janvier 1986, pages 140 - 147; T.Y. FAN ET AL.: 'Nd:MgO:LiNbO3 spectroscopy and laser device.' * abrégé * * page 140, colonne 1, ligne 1 - ligne 6 * * page 144, colonne 2, ligne 18 - ligne 47 * | 1-3,8,9 | |
| A | IEEE PHOTONICS TECHNOLOGY LETTERS vol. 1, no. 10, Octobre 1989, J. WEBJÖRN ET AL.: 'Blue light generated by frequency doubling of laser diode light in a lithium niobate channel waveguide ' * abrégé * | 1,2,5 | DOMAINES TECHNIQUES RECHERCHES (Int. Cl.5)  H01S G02F |
| A | JOURNAL OF LIGHTWAVE TECHNOLOGY vol. 7, no. 10, Octobre 1989, pages 1597 - 1600; J. WEBJÖRN ET AL.: 'Fabrication of periodically domain-inverted channel waveguides in lithium niobate for second harmonic generation ' * abrégé * | 1,2,5-7 | |
| A | JOURNAL OF LIGHTWAVE TECHNOLOGY vol. LT-4, no. 7, Juillet 1986, pages 772 - 777; W. SOHLER ET AL.: 'Integrated optical parametric devices ' * abrégé * | 1,10,11 | |

Le présent rapport a été établi pour toutes les revendications

| Lieu de la recherche | Date d'achèvement de la recherche | Examinateur |
|---|---|---|
| LA HAYE | 09 JUILLET 1991 | GALANTI M. |

EPO FORM 1503 03.82 (P0402)

8

Office européen
des brevets

**RAPPORT DE RECHERCHE EUROPEENNE**

Numero de la demande

EP    91 40 0808
Page 2

| Catégorie | Citation du document avec indication, en cas de besoin, des parties pertinentes | Revendication concernée | CLASSEMENT DE LA DEMANDE (Int. Cl.5) |
|---|---|---|---|
| A | PROCEEDINGS OF THE 5TH EUROPEAN CONFERENCE ON INTEGRATED OPTICS, PARIS, 26-28 AVRIL 1989 vol. 1141, pages 32 - 36; M.J.LI ET AL.: 'Cerenkov configuration second harmonic generation ' * page 33 * | 1,2 | |

**DOCUMENTS CONSIDERES COMME PERTINENTS**

DOMAINES TECHNIQUES
RECHERCHES (Int. Cl.5)

Le présent rapport a été établi pour toutes les revendications

| Lieu de la recherche | Date d'achèvement de la recherche | Examinateur |
|---|---|---|
| LA HAYE | 09 JUILLET 1991 | GALANTI M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

9